# EUROPEAN PATENT SPECIFICATION

(11) **EP 3 068 003 B1**
(45) Date of publication and mention of the grant of the patent: **06.09.2017**
(21) Application number: 15158658.3
(22) Date of filing: 11.03.2015
(51) Int. Cl.: H02G 3/04, C04B 28/14, C04B 111/28

(54) **GYPSUM PLATE ASSEMBLY**
GIPSPLATTENANORDNUNG
ENSEMBLE DE PLAQUE DE PLÂTRE

(43) Date of publication of application: 14.09.2016
(73) Proprietor: RF-Technologies, 9860 Oosterzele (BE)
(72) Inventor: Santens, Bernard, 9860 Oosterzele (BE); Vandenheede, Pascal, 9860 Oosterzele (BE)
(74) Representative: BiiP cvba

(56) References cited:
- EP-A2- 1 191 653
- WO-A1-2006/024549
- WO-A1-2012/116162
- WO-A1-2014/191664
- WO-A2-2012/049077
- US-A- 4 564 544

## Description

### Technical Field

The present invention relates to porous and low-density fire-retardant gypsum plates and fire-protective ducts assembled from such plates by means of direct fasteners, preferably screws.

### Background for the invention

Fire protection includes both 'active', i.e. designed to activate when a fire breaks out, and 'passive' barriers. The passive measures are generally built-in to the structure and serve the purpose of protecting the structure in the event of a fire, by reducing or preventing internal and external fire spread, as well as by maintaining the stability of the building and its functional elements such as electrical or plumbing installations.

A commonly used solution for protecting ventilation, fire-extraction, or wiring ducts or shafts are duct-shaped assemblies made of gypsum plaster plates (alternatively calcium-silicate based plates are known from eg. WO 2014/191664). Gypsum plaster is mainly made from calcium sulphate dihydrate (CaSO4 • 2H2O), also known as gypsum, which is a naturally existing mineral deposit broadly recognised and appreciated for its high fire-resistance. There are however two major problems with gypsum. Firstly it is heavy. Secondly, it is very difficult to be fastened into assemblies due to its high brittleness. Furthermore, this brittleness increases even further with rising temperature, which is an obvious and major drawback for a fire barrier which is expected to sustain its shape and thus provide physical protection from fire for as long as possible. For counteracting the two above mentioned flaws, there exist in the art many gypsum plaster formulations comprising various low-density stabilising additives, such as binders or fibres. Alternatively, another common practice to decrease the heavy weight of gypsum involves introduction of air pores by foaming or aerating gypsum plaster mixtures before drying them to plates.

Examples of such formulations are known from prior art documents such as WO2012116162, WO2012116228, or WO2012049077. The known modifications usually succeed in decreasing the density and consequently the weight of the gypsum plaster, however the problem of easy breaking under mechanical stress, such as the one occurring while driving a fastener into a gypsum plate body, generally persists. For the latter reason, there also exist in the art several different approaches and devices for bringing gypsum plaster plates together.

The first strategy involves production of composite gypsum plates comprising at least one brittle gypsum core layer coated by at least one stabilising layer, usually of a fibre-rich material. Examples of such plates can be found in documents like US6182407 or WO03000620. Of course, the problem of the above approach is the necessity of multistep preparation of such composite plates, wherein different layers forming the composite, must naturally be prepared in separate manufacturing steps and from differing pre-mixes.

Another strategy involves profiling gypsum plates to comprise compatibly profiled edges that e.g. can be slid or clipped onto one another to form a duct, and then stabilised by an adhesive, an external support (e.g. a ring), or both. An example of such solution is given in EP1191653. Said strategy however poses a major problem caused by frequent breaking of protrusions in the compatible profiles, which interferes with the assembling process and further also causes material losses due to the fact that the damaged plates must be discarded.

Lastly, another common approach involves provision of specialised scaffolds for accommodating a plurality of adjacent gypsum plates, such as a metal scaffold disclosed in US2006168906. Similarly, WO2006024549 teaches the use of fire-resistant gypsum panels in air ducts or elevator shafts, which can be positioned in said structures by means of metal frameworks or support studs.

Of course, manufacturing of such specialised scaffolds appears much more complicated and laborious than a straight-forward regular joining of plates by screws. However, due to the afore-described problem of brittleness, it has been notoriously difficult to even impossible to provide a uniform gypsum plate composition for plates of certain thickness that could afford for a repeatable joining of gypsum plaster plates directly by screws on a manufacturing-scale. By directly, it is meant that no additional high-fibre layer (such as a plywood board or high-fibre/gypsum mixture) or a stabilising structure, such as a metal plate, would have to be provided in between at least two adjacent gypsum plates to prevent at least one of them from breaking or cracking during driving of a simple fastener (e.g. a screw) that fully passes through the thickness of at least one of these plates.

WO2008045217 teaches attachment of a gypsum board to an underlying substrate by a screw; however it should be noted that the screw does not pass the gypsum plate but is positioned in a zone of a plate exclusively filled by a less brittle intumescent material.

Therefore, the above-cited prior art documents confirm the notion that gypsum plaster plates comprising between at least 50w%-80w% gypsum (CaSO4 · 2H2O) or a gypsum-like material bassanite (also known as hemihydrate 2CaSO4 · H2O), or a mixture thereof, are too brittle to be joined directly be means of a plurality of screws passing through the entire thickness of at least one of the plates without any intermediate fibrous stabilising layer.

The present invention is therefore based on an unexpected finding, that unreinforced uniform plates (i.e. not composite, not made of at least two compositionally different layers) comprising 30v%-40v% air cavities and at least 50-80 w% of CaSO₄ · 2H₂O or CaSO₄ · 0.5H₂O, CaS or a mixture thereof, can be directly and stably fastened with metal fasteners directly driven into the body of said plates, while attaining repeatable assembly quality and without facing brittleness or cracking problem. Said and other advantages of the present invention are hereby presented in continuation.

### Summary of the invention

The present invention is defined in the appended independent claims. Preferred embodiments are defined in the dependent claims. In particular, the present invention concerns a duct or shaft assembly for providing a fire protection to ventilation, smoke-extraction, water- or gas-pipe, or electrical wiring ducts or shafts and the like, said duct or shaft assembly having sidewalls comprising at least two gypsum plaster plates made of a substantially uniform mixture comprising:
- At least 50w% (in total weight of solids) of gypsum (CaSO4 · 2H2O), or bassanite (2CaSO4 · H2O), or calcium sulphide (CaS), or a mixture thereof;
- between 0w% - 15w% (in total weight of solids) fire retardant;
- between 0w% - 15w% (in total weight of solids) fibres; and
- 20v%-50v% (in total volume of a gypsum plaster plate), preferably 30v%-40v% air cavities;
wherein, said at least two gypsum plaster plates are fastened by means of at least one fastener that extends and passes through the thickness of at least one of said gypsum plaster plates and fixedly enters into the second gypsum plaster plate.

In a further aspect, the present invention also concerns a method for assembling a duct or a shaft for providing a fire protection to ventilation, smoke-extraction, or wiring-ducts or shafts and the like, said method comprising the steps of:
a) providing at least two gypsum plaster plates made of a substantially uniform mixture comprising:
   - At least 50w% (in total weight of solids) of gypsum (CaSO4 · 2H2O), or bassanite (2CaSO4 · H2O), or calcium sulphide (CaS), or a mixture thereof,
   - between 0w% - 15w% (in total weight of solids) fire retardant,
   - between 0w% - 15w% (in total weight of solids) fibres, and
   - 20v%-50v%, preferably 30v%-40v% (in total volume of a plaster plate) air cavities;
   and
b)fastening said plates by means of at least one fastener such that said fastener extends and passes through the thickness of at least one of said gypsum plaster plates and fixedly enters into the second gypsum plaster plate,
wherein the fastener is entered (e.g. screwed) through into said at least one gypsum plaster plate directly, and preferably without provision of a pre-drilled hole in said gypsum plaster plate for accommodating said fastener.

Finally, the present invention also provides a use in assembling a fire protection duct or shaft of at least two gypsum plaster plates directly fastened by means of at least one fastener, wherein said fastener extends and passes through the thickness of at least one of said gypsum plaster plates and fixedly enters into the second gypsum plaster plate with no additional stabilising structures positioned at the interface between said at least two gypsum plaster plates through which said fastener extends and passes and preferably without provision of any pre-drilled hole for accommodating said fastener.

### Brief description of the Figures

For a fuller understanding of the nature of the present invention, reference is made to the following detailed description taken in conjunction with the accompanying drawings in which:

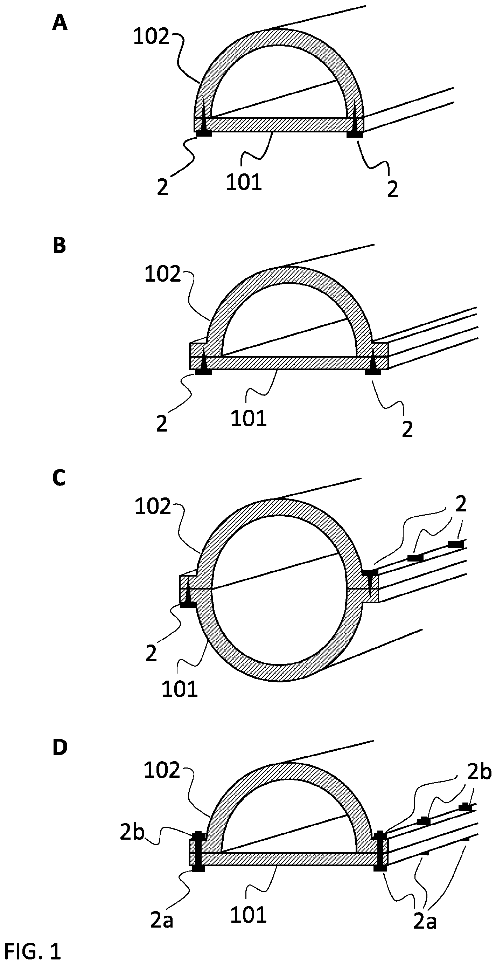

**Figure 1** shows a cross sections of a duct assembly according to one embodiment of the present invention, wherein the duct is formed by at least two gypsum plates, at least one of said plates being U-shaped. The different sections A-C show different possible arrangement of such embodiment. The reference numbers are as follows: 1- gypsum plate profile (individual plates 101-102), 2 - fastener such as a screw.

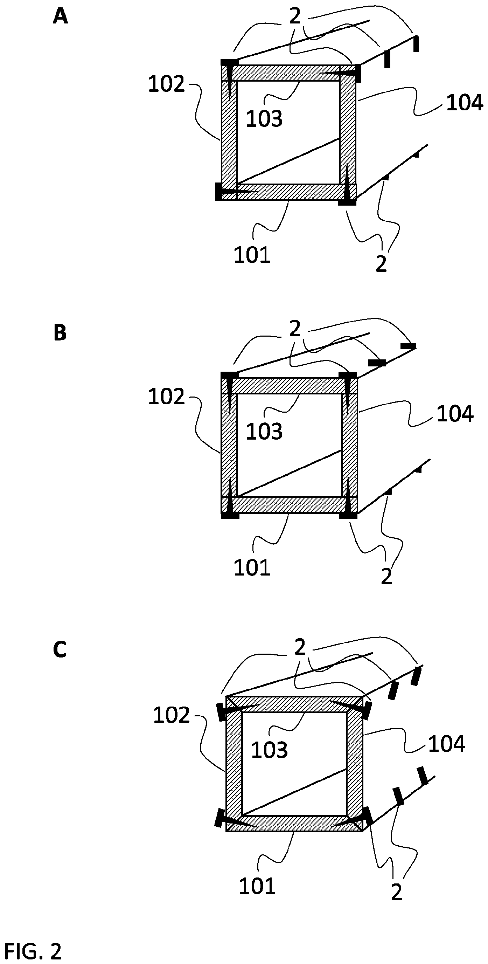

**Figure 2** shows a cross sections of a duct assembly according to another embodiment of the present invention, wherein the duct is formed by four gypsum plates. The different sections A-C show different possible arrangement of such embodiment varying with respect of gypsum plates lengths, their assembly modes, and position of the fasteners. The reference numbers are as follows: 1- gypsum plate profile (individual plates 101-104), 2 - fastener such as a screw.

### Definitions

As used herein, the term *"gypsum plaster plate"* is to be construed as relating to any plate or board comprising gypsum (CaSO4 · 2H2O), or its functional equivalents such as bassanite (also known as hemihydrate or "plâtre"; 2CaSO4 · H2O), or calcium sulphide (CaS).

As used herein the term *"substantially uniform"* is to be understand as relating to a structure of a mixture of elements having a relatively uniform distribution over the entire volume taken by said mixture without formation of easily distinguishable sub-structures such as layers or stretches of material differing with respect to their composition as compared to their neighbouring environment within the volume of said mixture. From the above, it should be understood that "substantially uniform" shall relate to materials not being composites, i.e. being formed by distinct layers. Conversely, the appearance of randomly occurring inclusions or precipitates, such that are expected in given conditions and which are otherwise surrounded in all directions by a uniformly distributed mixture of elements, should not be excluded within the meaning of the term *"substantially uniform".* Lastly, the term *"substantially uniform"* should not exclude appearance of air cavities in a given mixture of elements, provided that said air cavities are relatively evenly distributed over the entire volume of a given mixture, even if the average sizes of said porosities can differ.

Furthermore, as used herein, the term weight-percent (w%) is to be construed as the weight fraction of a given substance in the total weight of the solid composition that comprises said substance, wherein the term *"solid"* is to be broadly construed as comprising all the components of a given composition including bound therein water molecules but excluding porosities such as air cavities.

Similarly, the term volume-percent (v%) is to be construed as referring to a given volume that an element or a group of elements occupy, relative to the entire volume of a mixture which part said element or group of elements form.

Finally, as used herein, the term *"fastener"* shall be construed as generally referring to any elongated, solid, usually metal, device that can mechanically join or locate two components together. Preferred herein fasteners include fasteners generally equipped with a conical ending, for example male-threaded (i.e. external threaded) conical screws, sharp-pointed pins, nails, or even some types of staples; however cylindrical fasteners such as a rivets or bolts are also be possible.

### Detailed description of the invention

The present invention provides a duct or shaft assembly for providing a fire protection to ventilation, smoke-extraction, or wiring ducts, shafts, and the like. In particular, as schematically shown in Figures 1 and 2, the duct or shaft assembly according to the present invention has sidewalls comprising at least two gypsum plaster plates (101, 102) made of a substantially uniform mixture comprising:
- At least 50w% of gypsum (CaSO4 · 2H2O), or bassanite (2CaSO4 · H2O), or calcium sulphide (CaS), or a mixture thereof;
- between 0w% - 15w% fire retardant;
- between 0w% - 15w% fibres; and
- 20v%-50v%, preferably 30v%-40v% air cavities;
wherein, said at least two gypsum plaster plates (101, 102) are fastened by means of at least one fastener (2) that extends and passes through the thickness of at least one of said gypsum plaster plates and fixedly enters into, and optionally passes through, the second gypsum plaster plate.

For illustrative purposes only, for example in Figure 1 panels A and B, the first gypsum plaster plate, through which the fastener (2) extends and passes, is referenced with the number 101; while the second gypsum plaster plate, into which the fastener (2) fixedly enters, is referenced with the number 102.

The process of manufacturing the gypsum plate sidewalls of the assembly according to the invention is rather standard and, for example, can comprise the steps of:
a) providing a gypsum plaster/water mixture, such that the weight fraction (w%) of gypsum, bassanite, CaS, or a mixture thereof, in the total weight of solids forming the final gypsum plaster plate, is at least 50w%, preferably above 60w%, more preferably above 70w%; and wherein said mixture
   ∘ further also comprises any suitable foaming agent currently known in the art, and
   ∘ optionally, comprises a fire retardant compound and/or fibres, which, if present, are provided at such weight fraction (w%) in the gypsum plaster/water mixture, that said compounds will not exceed 15w% each in the total weight of solids forming the final gypsum plaster plate;
b) mixing the above-listed compounds provided in the gypsum plaster/water mixture;
c) inducing foaming of said mixture to the extent sufficient for obtaining between 20v%-50v%, preferably 30v%-40v% air cavities or pores in the total volume of the final gypsum plaster plate;
d) pressing the plates to obtain a gypsum plaster plate, preferably having a density lower or equal to 1.10 g/cm³, more preferably lower or equal to 0.95 g/cm³, most preferably lower or equal to 0.85 g/cm³;
e) and optionally, drying the plates.

In normal conditions, introduction of a foreign element, such as a screw or a nail, into the body of a gypsum plaster plate with a high (>50%) gypsum content, generates local stresses that create microcracks that will merge and extend throughout the structure of the gypsum plate ultimately causing its breaking. However, it appears that introduction of 20-50v%, or even better 30-40v% porosity into a high-gypsum plaster plate, effectively stops the expansion of the microcracks caused by driving of the fastener, and thus also prevents breaking of the plate. This may stem from the fact that the as the fastener is driven, it destroys the plaster plate only locally, i.e. at the interfaces of the pores in direct vicinity of the fastener shaft, which accounts for leaving the rest of the gypsum plaster plate unaffected. Further, thanks to the empty air-cavities, the progressing fastener is provided with an empty space inside the gypsum plate structure, which not only allows for its easier entrance into said plate's body, but also results in generation of much smaller stresses induced by forcing of the fastener into the gypsum plaster plate.

In a preferred embodiment, the fastener is selected from a screw, nail, bolt, rivet, or a staple, and preferably is a fastener having a conical shape, such as a nail or most preferably a screw. Gypsum plaster assemblies according to the invention as obtained using a plurality of such conical fasteners are schematically illustrated in Figure 1 panels A-C. Tapered threaded screws are particularly suitable as their threads stably and fixedly penetrate into the local porous structure of the porous gypsum plaster plates having the composition as specified above, allowing firm and solid joining of said plates into assemblies of the present invention, in an easy, economical, and automatable manner while at the same time attaining repeatable assembly quality. There exist many well-recognised and standardised in the art screw types that can be employed in building of the gypsum plaster duct assemblies of the invention. A typical example include VBA screws, such as the ones with a thread between 3 and 7 mm and a length comprised between 30 and 100 mm.

In another, however more laborious embodiment of the present invention, cylindrical fasteners (2a) can be employed for building the fire duct assemblies of the invention. Such cylindrical fasteners (2a), usually bolts, as schematically illustrated in Figure 1 panel D, can be inserted into pre-drilled holes passing through the thickness of at least two abutted against one another gypsum plaster plates (101, 102) and then stabilised by torquing a nut (2b) on the cylindrical fastener's (2a) side opposite of said fastener's head. However, it should be noted that due to ease of the assembly, conically-terminated fasteners that directly enter into the porous structure of the gypsum plates without the need of pre-drilling any holes, are usually preferred.

In preferred embodiments of the invention, the thickness of the at least one gypsum plaster plate (e.g. plate 101 in Figure 1A and B) through which the fastener (2) passes is comprised between 25-55 mm. However, if need be, with an appropriate choice of fasteners and surface area of the gypsum plaster plates, said thickness can be extended even to 100 mm or more without encountering undue brittleness of the plate.

In many embodiments of the present invention, the diameter of a suitable fastener is comprised between 1-10 mm, preferably between 3-7 mm. Further, in preferred embodiments the surface area of the gypsum plaster boards can be comprised between 100x100 - 2500x2500 mm, but can be adapted within certain degree of tolerance according to given needs.

Of course, as can immediately be appreciated by any skilled artisan, greater surface areas will require a different number of fasteners in order to keep the assembly sufficiently stable. Therefore, in preferred embodiments of the present invention, as illustratively shown in Figure 1A-D, the at least two gypsum plaster plates are fastened by means of a plurality of fasteners.

In a preferred embodiment in accordance with the above, the distances between the neighbouring fasteners are usually comprised between 5-100 cm, preferably between 10-80 cm, more preferably between 10-25 cm or 20-50 cm.

As schematically illustrated in Figure 2, in possible embodiments, the number of gypsum plaster plates forming the duct assembly of the invention, can be greater than two. In an advantageous, for geometrical and assembling reasons, embodiment, the duct or shaft assembly of the invention has sidewalls comprising four gypsum plates (Figure 2A-C). One of the major advantages of the present invention is that the gyspsum plates do not need to be profiled or provided with compatible edge extensions in order to facilitate building of the duct or shaft assembly or to potentially render the resulting assembly air-tight; the plates can be simply manufactured as straight-sided blocks that will be held in place and stabilised by means of the preferably relatively evenly-distributed fasteners.

As mentioned above, it is preferred for their function as fire barrier that the provided herein duct or shaft assemblies are air-tight and comply with fire resistance tests according to EN 1366-1, EN 1366-5 and EN 1366-8. Therefore, in another preferred embodiment, a duct or shaft assembly is provided wherein the fastening by means of the at least one, preferably a plurality of fasteners between at least two, preferably all, gypsum plaster plates is air-tight.

A further advantageous modification in support of the most desired function of the provided-herein assemblies, is addition of a fire retardant substance of any known type currently used in the art, preferably of perlite or vermiculite type. Such addition is preferable but not necessary, and in general should not exceed 1 5w% (in total weight of solids) of a fire retardant substance in gypsum plate composition. In line with the above, in a preferred embodiment, a duct or shaft assembly is provided, wherein the fire retardant, if present, is perlite or vermiculite, or a mixture of both.

Similarly, it was found that addition of up to 1 5%, preferably less than 10% or even 5% fibres of various types, such as glass fibres, natural cellulosic or synthetic polymer fibres, does not substantially interfere with assembling in accordance with the invention of gypsum plaster plates having a composition as indicated *supra.* Therefore, in a possible embodiment, an assembly is provided wherein fibres, if present, do not exceed 10%, or preferably 5%.

It further desirable for construction reasons, that the present assembly is as light as possible. Consequently, in preferred embodiments, a duct or a shaft assembly is provided, wherein the density of gypsum plaster plates is equal or lower than 1.10 g/cm³, preferably equal or lower than 0.85 g/cm³

As mentioned before, one of the advantages of the invention, is that the gypsum plates suitable for building the assembly of the invention, can be manufactured in a straight-forward and almost immediate way, without the need of creating composite plates of more complicated structures. Therefore, in most preferred embodiments, a duct or shaft assembly is provided wherein at least two gypsum plaster plates are uniform gypsum plaster plates not being composite plates, i.e. not being made of layers of materials having different internal structures of compositions.

In line with the above, in order to stream-line the production speed and lower its costs, the present invention aims at not using any intermediate structures of layers of fibrous stabilising material known in the art at the interface of at least two gypsum plates through which at least one fastener directly passes of enters. However, in some applications it may be desirable to provide at this interface a thin, i.e. thinner than 3 mm in thickness, preferably even than 1 mm continuous or discontinuous layer of adhesive. Such adhesive would not confer any noticeable effect on preventing breaking of any of the gypsum plates but would practically serve to hold the gypsum plates together prior to driving of the screws or other fasteners on an assembly line; or alternatively, would act to enhance air-tightness at the zones of at least two abutting gypsum plate profiles where micro-inequalities could be present. Therefore, in a possible embodiment, the present invention further provides a duct or shaft assembly in accordance with the afore-listed embodiments, said assembly further comprising a thin, defined as having a thickness below 3mm, preferably below 1 mm; layer of an adhesive at the interface between at least two gypsum plaster plates.

In a further aspect, the present invention also provides a method of assembling a duct or a shaft for providing a fire protection to ventilation, smoke-extraction, or wiring-ducts or shafts, or water or gas-pipes and the like, said method comprising the steps of:
c) providing at least two gypsum plaster plates made of a substantially uniform mixture comprising:
   - At least 50w% (in total weight of solids) of gypsum (CaSO4 · 2H2O), or bassanite (2CaSO4 · H2O), or calcium sulphide (CaS), or a mixture thereof,
   - between 0w% - 15w% (in total weight of solids) fire retardant,
   - between 0w% - 15w% (in total weight of solids) fibres, and
   - 20v%-50v%, preferably 30v%-40v% (in total volume of a plaster plate) air cavities;
   and
d)fastening said plates by means of at least one fastener such that said fastener extends and passes through the thickness of at least one of said gypsum plaster plates and fixedly enters into the second gypsum plaster plate,
wherein the fastener is entered (e.g. screwed) through into said at least one gypsum plaster plate directly, and preferably without provision of a pre-drilled hole in said gypsum plaster plate for accommodating said fastener.

In a preferred embodiment of the above mention method, the fastener is preferably selected from a screw, nail, staple, bolt, or a rivet, and preferably is a screw.

In a further embodiment of the method according to the invention, said method further comprises the step of applying a thin, defined as having a thickness below 3mm, preferably below 1 mm; of an adhesive at the interface between the gypsum plaster plates.

Lastly, the present invention also provides a use of at least two uniform (i.e. not composite) gypsum plaster plates fastened by means of at least one fastener, preferably a screw, wherein said fastener extends and passes through the thickness of at least one of said gypsum plaster plates and fixedly enters into the second gypsum plaster plate with no additional stabilising structure being positioned at the interface between said at least two gypsum plaster plates through which said fastener extends and passes, said use for assembling a fire protection duct or shaft..

## Claims

1. A duct or shaft assembly for providing a fire protection to ventilation, smoke-extraction, or wiring- ducts or shafts and the like, said duct or shaft assembly having sidewalls comprising at least two gypsum plaster plates (101, 102, 103, 104) fastened by means of at least one fastener (2) that extends and passes through the thickness of at least one of said gypsum plaster plates (101, 102, 103, 104) and fixedly enters into the second gypsum plaster plate, **characterized in that** said at least two gypsum plaster plates (101, 102, 1 03, 1 04) are made of a substantially uniform mixture comprising:
- At least 50w% of gypsum (CaSO4 · 2H2O), or bassanite (2CaSO4 · H2O), or calcium sulphide (CaS), or a mixture thereof;
- between 0w% - 15w% fire retardant;
- between 0w% - 15w% fibres; and
- 20v%-50v%, preferably 30v%-40v% air cavities.

2. Duct or a shaft assembly according to claim 1, wherein the fastener (2) is selected from a screw, bolt, nail, a staple, or a rivet, and preferably is a screw or a bolt.

3. Duct or a shaft assembly according to claim 1 or 2, wherein the thickness of a gypsum plaster plate (101, 102, 103, 104) through which the fastener (2) passes is comprised between 25-55 mm.

4. Duct or a shaft assembly according to any of the preceding claims, wherein the diameter of the fastener (2) is comprised between1-10 mm, preferably between 3-7 mm.

5. Duct or a shaft assembly according to any of the preceding claims, wherein said at least two gypsum plaster plates (101, 102, 103, 104) are fastened by means of a plurality of said fasteners (2).

6. Duct or a shaft assembly according to claim 5, wherein the distances between the neighbouring fasteners (2) are comprised between 5-100cm, preferably between 10-80cm, more preferably between 10-25cm or 20-50cm.

7. Duct or a shaft assembly according to any of the preceding claims, wherein said duct or shaft assembly has sidewalls comprising 4 gypsum plates (101, 102, 1 03, 104).

8. Duct or a shaft assembly according to any of the preceding claims, wherein the fastening between said at least two gypsum plaster plates (101, 102, 103, 104) by means of said at least one fastener (2) is air-tight.

9. Duct or a shaft assembly according to any of the preceding claims, wherein the fire retardant, if present, is perlite or vermiculite, or a mixture of both.

10. Duct or a shaft assembly according to any of the preceding claims, wherein the density of said at least two gypsum plaster plates (101, 102, 103, 104) is equal or lower than 1.10 g/cm³, preferably equal or lower than 0.85 g/cm³

11. Duct or a shaft assembly according to any of the preceding claims, wherein said at least two gypsum plaster plates (101, 102, 103, 104) are uniform gypsum plaster plates and not composite plates.

12. Duct or a shaft assembly according to any of the preceding claims, further comprising a thin, defined as having a thickness below 3mm, preferably below 1 mm; layer of an adhesive at the interface between the gypsum plaster plates (101, 1 02, 1 03, 1 04).

13. A method of assembling a duct or a shaft for providing a fire protection to ventilation, smoke-extraction, or wiring- ducts or shafts and the like, said method comprising the the steps of:
a) providing at least two gypsum plaster plates (101, 102, 1 03, 104) and
b) fastening said plates (101, 102, 103, 104) by means of at least one fastener (2) such that said fastener extends and passes through the thickness of at least one of said gypsum plaster plates (101, 102, 103, 104) and fixedly enters into the second gypsum plaster plate,
wherein the fastener (2) is entered (e.g. screwed) through into said at least one gypsum plaster plate directly, and preferably without provision of a pre-drilled hole in said gypsum plaster plate for accommodating said fastener,
**characterized in that** said at least two gypsum plaster plates (101, 102, 103, 104) are made of a substantially uniform mixture comprising:
- At least 50w% (in total weight of solids) of gypsum (CaSO4 · 2H2O), or bassanite (2CaSO4 · H2O), or calcium sulphide (CaS), or a mixture thereof,
- between 0w% - 15w% (in total weight of solids) fire retardant,
- between 0w% - 15w% (in total weight of solids) fibres, and
- 20v%-50v%, preferably 30v%-40v% (in total volume of a plaster plate) air cavities.

14. Method according to claim 13, wherein said fastener (2) is selected from a screw, nail, staple, rivet, or a bolt, and preferably is a screw.

15. Use in assembling a fire protection duct or shaft according to claim 1, of at least two gypsum plaster plates (101, 102, 103, 104) fastened by means of at least one fastener (2), wherein said fastener (2) extends and passes through the thickness of at least one of said gypsum plaster plates (101, 102, 1 03, 1 04) and fixedly enters into the second gypsum plaster plate with no additional stabilising structure being positioned at the interface between said at least two gypsum plaster plates (101, 1 02, 103, 1 04) through which said fastener (2) extends and passes.

## Patentansprüche

1. Kanal- oder Wellenbaugruppe zur Bereitstellung eines Brandschutzes für Lüftungs-, Entrauchungs- oder Verdrahtungskanäle oder -wellen und dergleichen, wobei die besagte Kanal- oder Wellenbaugruppe Seitenwände aufweist, zumindest zwei Gipsputzplatten (101, 102, 103, 104) umfassend, die anhand von zumindest einem Befestigungsmittel (2) befestigt sind, das sich durch die Dicke von zumindest einer der besagten Gipsputzplatten (101, 102, 103, 104) hindurch erstreckt und verläuft, und fest in die zweite Gipsputzplatte eintritt, **dadurch gekennzeichnet, dass** die besagten zumindest zwei Gipsputzplatten (101, 102, 103, 104) aus einem im Wesentlichen einheitlichen Gemisch gefertigt sind, umfassend:
- zumindest 50 Gew.-% an Gips (CaSO4 • 2H2O), oder Bassanit (2CaSO4 • H2O), oder Kalziumsulfid (CaS), oder ein Gemisch daraus;
- zwischen 0 Gew.-% und 15 Gew.-% feuerhemmendes Mittel;
- zwischen 0 Gew.-% und 15 Gew.-% Fasern; und
- 20 Vol.-% - 50 Vol.-%, vorzugsweise 30 Vol.-% - 40 Vol.-% Lufthohlräume.

2. Kanal oder Wellenbaugruppe nach Anspruch 1, wobei das Befestigungsmittel (2) aus einer Schraube, einem Bolzen, Nagel, einer Klammer oder einem Niet ausgewählt wird und vorzugsweise eine Schraube oder ein Bolzen ist.

3. Kanal oder Wellenbaugruppe nach Anspruch 1 oder 2, wobei die Dicke einer Gipsputzplatte (101, 102, 103, 104), durch die hindurch das Befestigungsmittel (2) verläuft, zwischen 25-55 mm enthalten ist.

4. Kanal oder Wellenbaugruppe nach einem der vorhergehenden Ansprüche, wobei der Durchmesser des Befestigungsmittels (2) zwischen 1-10 mm, vorzugsweise zwischen 3-7 mm enthalten ist.

5. Kanal oder Wellenbaugruppe nach einem der vorhergehenden Ansprüche, wobei die besagten zumindest zwei Gipsputzplatten (101, 102, 103, 104) anhand einer Vielzahl von besagten Befestigungsmitteln (2) befestigt sind.

6. Kanal oder Wellenbaugruppe nach Anspruch 5, wobei die Abstände zwischen den benachbarten Befestigungsmitteln (2) zwischen 5-100 cm, vorzugsweise zwischen 10-80 cm, am besten zwischen 10-25 cm oder 20-50 cm enthalten sind.

7. Kanal oder Wellenbaugruppe nach einem der vorhergehenden Ansprüche, wobei die besagte Kanal- oder Wellenbaugruppe Seitenwände aufweist, die 4 Gipsplatten (101, 102, 103, 104) umfassen.

8. Kanal oder Wellenbaugruppe nach einem der vorhergehenden Ansprüche, wobei die Befestigung zwischen den besagten zumindest zwei Gipsputzplatten (101, 102, 103, 104) anhand von dem besagten zumindest ein Befestigungsmittel (2) luftdicht ist.

9. Kanal oder Wellenbaugruppe nach einem der vorhergehenden Ansprüche, wobei das feuerhemmende Mittel, falls vorhanden, Perlit oder Vermiculit, oder ein Gemisch aus beiden ist.

10. Kanal oder Wellenbaugruppe nach einem der vorhergehenden Ansprüche, wobei die Dichte der besagten zumindest zwei Gipsputzplatten (101, 102, 103, 104) kleiner oder gleich 1,10 g/cm³, vorzugsweise kleiner oder gleich 0,85 g/cm³ ist.

11. Kanal oder Wellenbaugruppe nach einem der vorhergehenden Ansprüche, wobei die besagten zumindest zwei Gipsputzplatten (101, 102, 103, 104) einheitliche Gipsputzplatten und keine Verbundstoffplatten sind.

12. Kanal oder Wellenbaugruppe nach einem der vorhergehenden Ansprüche, darüber hinaus eine dünne, als eine Dicke von weniger als 3 mm, vorzugsweise von weniger als 1 mm aufweisend definierte Schicht eines Klebstoffes an der Schnittstelle zwischen den Gipsputzplatten (101, 102, 103, 104) umfassend.

13. Verfahren zum Zusammensetzen eines Kanals oder einer Welle zur Bereitstellung eines Brandschutzes für Lüftungs-, Entrauchungs- oder Verdrahtungskanäle oder -wellen und dergleichen wobei das besagte Verfahren die Schritte umfasst:
a) Bereitstellen von zumindest zwei Gipsputzplatten (101, 102, 103, 104) und
b) Befestigen der besagten Platten (101, 102, 103, 104) anhand von zumindest einem Befestigungsmittel (2), sodass sich das besagte Befestigungsmittel durch die Dicke von zumindest einer der besagten Gipsputzplatten (101, 102, 103, 104) hindurch erstreckt und verläuft, und fest in die zweite Gipsputzplatte eintritt,
wobei das Befestigungsmittel (2) direkt, und vorzugsweise ohne Bereitstellung eines vorgebohrten Loches in der besagten Gipsputzplatte hindurch in die besage zumindest eine Gipsputzplatte eingeführt (z.B. geschraubt) wird, um das besagte Befestigungsmittel aufzunehmen,
**dadurch gekennzeichnet, dass** die besagten zumindest zwei Gipsputzplatten (101, 102, 103, 104) aus einem im Wesentlichen einheitlichen Gemisch gefertigt sind, umfassend:
- zumindest 50 Gew.-% (in Gesamtgewicht der Feststoffe) an Gips (CaSO4 • 2H2O), oder Bassanit (2CaSO4 • H2O), oder Kalziumsulfid (CaS), oder ein Gemisch daraus;
- zwischen 0 Gew.-% und 15 Gew.-% (in Gesamtgewicht der Feststoffe) feuerhemmendes Mittel;
- zwischen 0 Gew.-% und 15 Gew.-% (in Gesamtgewicht der Feststoffe) Fasern; und
- 20 Vol.-% - 50 Vol.-%, vorzugsweise 30 Vol.-% - 40 Vol.-% (in Gesamtvolumen einer Putzplatte) Lufthohlräume.

14. Verfahren nach Anspruch 13, wobei das besagte Befestigungsmittel (2) aus einer Schraube, einem Nagel, einer Klammer, einem Niet oder einem Bolzen ausgewählt wird und vorzugsweise eine Schraube ist.

15. Verwendung bei der Zusammensetzung eines Brandschutzkanals oder-welle nach Anspruch 1, von zumindest zwei Gipsputzplatten (101, 102, 103, 104), die anhand von zumindest einem Befestigungsmittel (2) befestigt sind, wobei sich das besagte Befestigungsmittel (2) durch die Dicke von zumindest einer der besagten Gipsputzplatten (101, 102, 103, 104) hindurch erstreckt und verläuft, und fest in die zweite Gipsputzplatte eintritt, wobei keine zusätzliche Stabilisierungsstruktur an der Schnittstelle zwischen den besagten beiden Gipsputzplatten (101, 102, 103, 104) positioniert ist, durch die hindurch sich das besagte Befestigungsmittel (2) erstreckt und verläuft.

## Revendications

1. Conduit ou ensemble gaine, destiné à fournir une protection au feu à des conduits ou gaines de ventilation, d'extraction de fumée ou de câblage, et similaires, ledit conduit ou ensemble gaine possédant des parois latérales comprenant au moins deux plaques de plâtre de gypse (101, 102, 103, 104) fixées au moyen d'au moins une fixation (2) qui s'étend et passe à travers l'épaisseur d'au moins une desdites plaques de plâtre de gypse (101, 102, 103, 104) et entre fixement dans la seconde plaque de plâtre de gypse, **caractérisé en ce que** lesdites au moins deux plaques de plâtre de gypse (101, 102, 103, 104) sont constituées d'un mélange essentiellement uniforme comprenant :
- au moins 50 % en poids de gypse (CaSO4 · 2H2O), ou de bassanite (2CaSO4 · H2O), ou de sulfure de calcium (CaS), ou d'un mélange de ceux-ci ;
- entre 0 % en poids et 15 % en poids de produit ignifuge ;
- entre 0 % en poids et 15 % en poids de fibres ; et
- 20 % en volume à 50 % en volume, de préférence 30 % en volume à 40 % en volume de cavités d'air.

2. Conduit ou ensemble gaine selon la revendication 1, dans lequel la fixation (2) est choisie parmi une vis, un boulon, un clou, une agrafe ou un rivet et est, de préférence, une vis ou un boulon.

3. Conduit ou ensemble gaine selon la revendication 1 ou 2, dans lequel l'épaisseur d'une plaque de plâtre de gypse (101, 102, 103, 104) à travers laquelle passe la fixation (2) est comprise entre 25 et 55 mm.

4. Conduit ou ensemble gaine selon l'une quelconque des revendications précédentes, dans lequel le diamètre de la fixation (2) est compris entre 1 et 10 mm, de préférence entre 3 et 7 mm.

5. Conduit ou ensemble gaine selon l'une quelconque des revendications précédentes, dans lequel lesdites au moins deux plaques de plâtre de gypse (101, 102, 103, 104) sont fixées au moyen d'une pluralité desdites fixations (2).

6. Conduit ou ensemble gaine selon la revendication 5, dans lequel les distances entre les fixations voisines (2) sont comprises entre 5 et 100 cm, de préférence entre 10 et 80 cm, mieux encore entre 10 et 25 cm ou 20 et 50 cm.

7. Conduit ou ensemble gaine selon l'une quelconque des revendications précédentes, dans lequel ledit conduit ou ensemble gaine possède des parois latérales comprenant 4 plaques de gypse (101, 102, 103, 104).

8. Conduit ou ensemble gaine selon l'une quelconque des revendications précédentes, dans lequel la fixation entre lesdites au moins deux plaques de plâtre de gypse (101, 102, 103, 104) au moyen de ladite au moins une fixation (2) est étanche à l'air.

9. Conduit ou ensemble gaine selon l'une quelconque des revendications précédentes, dans lequel le produit ignifuge, s'il est présent, est de la perlite ou de la vermiculite, ou un mélange de l'une et l'autre.

10. Conduit ou ensemble gaine selon l'une quelconque des revendications précédentes, dans lequel la masse volumique desdites au moins deux plaques de plâtre de gypse (101, 102, 103, 104) est égale ou inférieure à 1,10 g/cm³, de préférence égale ou inférieure à 0,85 g/cm³

11. Conduit ou ensemble gaine selon l'une quelconque des revendications précédentes, dans lequel lesdites au moins deux plaques de plâtre de gypse (101, 102, 103, 104) sont des plaques de plâtre de gypse homogènes et non des plaques composites.

12. Conduit ou ensemble gaine selon l'une quelconque des revendications précédentes, comprenant en outre une mince couche, définie comme ayant une épaisseur inférieure à 3 mm, de préférence inférieure à 1 mm d'un adhésif au niveau de l'interface entre les plaques de plâtre de gypse (101, 102, 103, 104).

13. Procédé d'assemblage d'un conduit ou d'une gaine, destiné à fournir une protection au feu à des conduits ou gaines de ventilation, d'extraction de fumée ou de câblage et similaires, ledit procédé comprenant les étapes consistant à :
a) fournir au moins deux plaques de plâtre de gypse (101, 102, 103, 104) et
b) fixer lesdites plaques (101, 102, 103, 104) au moyen d'au moins une fixation (2) de telle sorte que ladite fixation s'étend et passe à travers l'épaisseur d'au moins une desdites plaques de plâtre de gypse (101, 102, 103, 104) et entre fixement dans la seconde plaque de plâtre de gypse,
dans laquelle la fixation (2) est introduite (par exemple, vissée) dans ladite au moins une plaque de plâtre de gypse directement, et de préférence sans prévoir de trou préforé dans ladite plaque de plâtre de gypse pour recevoir ladite fixation,
**caractérisé en ce que** lesdites au moins deux plaques de plâtre de gypse (101, 102, 103, 104) sont constituées d'un mélange essentiellement uniforme comprenant :
- au moins 50 % en poids (en poids total de matières solides) de gypse (CaSO4 · 2H2O), ou de bassanite (2CaSO4 · H2O) ou de sulfure de calcium (CaS), ou d'un mélange de ceux-ci,
- entre 0 % en poids et 15 % en poids (en poids total de matières solides) d'un produit ignifuge,
- entre 0 % en poids et 15 % en poids (en poids total de matières solides) de fibres, et
- 20 % en volume à 50 % en volume, de préférence 30 % en volume à 40 % en volume (en volume total d'une plaque de plâtre) de cavités d'air.

14. Procédé selon la revendication 13, dans lequel ladite fixation (2) est choisie parmi une vis, un clou, une agrafe, un rivet ou un boulon, et est de préférence une vis.

15. Utilisation pour l'assemblage d'un conduit ou d'une gaine de protection au feu selon la revendication 1, d'au moins deux plaques de plâtre de gypse (101, 102, 103, 104) fixées au moyen d'au moins une fixation (2), dans lequel ladite fixation (2) s'étend et passe à travers l'épaisseur d'au moins une desdites plaques de plâtre de gypse (101, 102, 103, 104) et entre fixement dans la seconde plaque de plâtre de gypse sans qu'aucune structure de stabilisation supplémentaire ne soit positionnée au niveau de l'interface entre lesdites au moins deux plaques de plâtre de gypse (101, 102, 103, 104) à travers lesquelles s'étend et passe ladite fixation (2).
